# EUROPÄISCHE PATENTANMELDUNG

(11) **EP 3 517 270 A1**
(43) Veröffentlichungstag der Anmeldung: **31.07.2019**
(21) Anmeldenummer: 18450012.2
(22) Anmeldetag: 20.12.2018
(51) Int. Cl.: B29C 44/14, B29C 44/58

(54) **VERFAHREN ZUR HERSTELLUNG EINES BAUTEILS SOWIE TRÄGER**

(30) Priorität: 25.01.2018 AT 242018
(71) Anmelder: ALBA Tooling & Engineering GmbH, 5552 Forstau (AT)
(72) Erfinder: Simonlehner, Gernot, A-8972 Ramsau (AT)
(74) Vertreter: Keschmann, Marc

(57) **Zusammenfassung**

Bei einem Verfahren zur Herstellung eines Bauteils mithilfe eines Formwerkzeugs, umfassend eine erste (1) und eine zweite (2) Formhälfte, wobei das Formwerkzeug durch eine Relativbewegung der ersten (1) und der zweiten (2) Formhälfte zueinander geschlossen werden kann, wobei eine Dekorschicht (3) in die erste Formhälfte (1) eingelegt wird, ein Träger (5) in die zweite Formhälfte (2) eingelegt wird, der Träger (5) und die Dekorschicht (3) anschließend durch Schließen des Formwerkzeuges unter Ausbildung wenigstens eines Hohlraums (4) in einem den wenigstens einen Hohlraum (4) vollumfänglich umgebenden Verbindungsbereich miteinander verbunden werden und der wenigstens eine Hohlraum (4) durch eine im Träger (5) angeordnete Füllöffnung (6) mit einem Füllmaterial, insbesondere einem aufschäumenden Material gefüllt wird, ist vorgesehen, dass die Verbindung des Trägers (5) mit der Dekorschicht (3) in dem Verbindungsbereich den wenigstens einen Hohlraum (4) öffnungsfrei abschließt und dass während des Füllens mit dem Füllmaterial Luft aus dem wenigstens einen Hohlraum (4) durch zumindest eine im Bereich des wenigstens einen Hohlraumes (4) angeordnete Entlüftungsöffnung (7) im Träger (5) entweicht.

## Beschreibung

Die Erfindung betrifft ein Verfahren zur Herstellung eines Bauteils mithilfe eines Formwerkzeugs, umfassend eine erste und eine zweite Formhälfte, wobei das Formwerkzeug durch eine Relativbewegung der ersten und der zweiten Formhälfte zueinander geschlossen werden kann, wobei eine Dekorschicht in die erste Formhälfte eingelegt wird, ein Träger in die zweite Formhälfte eingelegt wird, der Träger und die Dekorschicht anschließend durch Schließen des Formwerkzeuges unter Ausbildung wenigstens eines Hohlraums in einem den wenigstens einen Hohlraum vollumfänglich umgebenden Verbindungsbereich miteinander verbunden werden und der wenigstens eine Hohlraum durch eine im Träger angeordnete Füllöffnung mit einem Füllmaterial, insbesondere einem aufschäumenden Material gefüllt wird.

Weiters betrifft die Erfindung einen Träger zur Verwendung in dem erfindungsgemäßen Verfahren sowie ein Formwerkzeug zur Durchführung des erfindungsgemäßen Verfahrens.

Aus dem Stand der Technik ist eine Vielzahl von Verfahren zur Herstellung von Bauteilen mit schaumgefülltem Hohlraum mithilfe eines Formwerkzeuges bekannt, bspw. aus der DE 602005000107 T2. Hierbei wird zwischen einem Träger und einer Dekorschicht ein Hohlraum ausgebildet, in welchen durch eine im Träger angeordnete Füllöffnung ein aufschäumendes Polymer eingebracht wird. Um während des Einbringvorganges die Luft aus dem Hohlraum entweichen zu lassen, sind im Träger im Bereich der Verbindung mit der Dekorschicht, d.h. in einer den Hohlraum umgebenden Randzone, Entlüftungsöffnungen in Form von Entlüftungskanälen vorgesehen.

Nachteilig bei einem solchen Verfahren ist, dass die die Entlüftungskanäle aufweisende Randzone z.B. bei einer Verwendung des Bauteils als Innenraumverkleidung eines Kraftfahrzeugs nach dem Einbau verborgen bleiben muss, weil die Anordnung der Entlüftungskanäle das Erscheinungsbild der Verkleidung in der Randzone negativ beeinflusst. Es besteht jedoch das Bedürfnis, die Randzone als sichtbaren Bereich des Bauteils verwenden zu können, wobei die Randzone entsprechend den jeweiligen Design-Anforderungen auch breiter ausgebildet sein kann und zusätzliche Maßnahmen zum Verbergen der Randzone entfallen können. Gleichzeitig soll die Entlüftung des Hohlraumes während der Einbringung des Füllmaterials gewährleistet sein.

Es ist daher eine Aufgabe der Erfindung, ein Verfahren bereitzustellen, mit welchem Bauteile erhalten werden können, deren Randzone, in welcher der Träger mit der Dekorschicht verbunden ist, sichtbar bleiben und eine den Design-Anforderungen entsprechende Breite aufweisen kann, ohne die Entlüftung zu beeinträchtigen.

Zur Lösung dieser Aufgabe ist bei einem Verfahren der eingangs genannten Art im Wesentlichen vorgesehen, dass die Verbindung des Trägers mit der Dekorschicht in dem Verbindungsbereich den wenigstens einen Hohlraum öffnungsfrei abschließt und dass während des Füllens mit dem Füllmaterial Luft aus dem wenigstens einen Hohlraum durch zumindest eine im Bereich des wenigstens einen Hohlraumes angeordnete Entlüftungsöffnung im Träger entweicht. Erfindungsgemäß ist also vorgesehen, dass die Entlüftungsöffnung(en) nicht in der Randzone, d.h. in dem den Hohlraum umgebenden Bereich der Verbindung zwischen dem Träger und der Dekorschicht, sondern im Träger selbst vorgesehen ist/sind. Die zumindest eine Entlüftungsöffnung durchsetzt den Träger somit dort, wo der Träger den Hohlraum ausbildet. Dadurch kann der den Hohlraum vollumfänglich umgebende Verbindungsbereich frei von Entlüftungsöffnungen ausgebildet sein, wobei dieser Verbindungsbereich eine den Hohlraum ringsum abschließende Verbindung zwischen dem Träger und der Dekorschicht realisiert. Dadurch wird insbesondere der Effekt erzielt, dass die Anordnung der Entlüftungsöffnungen von dem den Hohlraum umgebenden Verbindungsbereich unabhängig ist, sodass der Verbindungsbereich den ästhetischen Anforderungen entsprechend frei gestaltet werden kann und insbesondere im eingebauten Zustand als sichtbarer Bereich des Bauteils genutzt werden kann.

Bevorzugt ist vorgesehen, dass die Verbindung des Trägers mit der Dekorschicht in dem Verbindungsbereich den wenigstens einen Hohlraum im Wesentlichen luftdicht abschließt. Unter der Bezeichnung "im Wesentlichen luftdicht" wird hierbei eine Ausbildung verstanden, bei welcher der Verbindungsbereich frei von definierten Entlüftungsöffnungen ist, wobei jedoch eine geringfügige, materialbedingte Luftdurchlässigkeit vorhanden sein kann, z.B. wenn das Material des Trägers selbst im Verbindungsbereich nicht völlig luftdicht ist.

Der Träger ist hierbei bevorzugt ein starrer Körper.

Beim Füllen des Hohlraumes wird die Luft durch das Füllmaterial aus dem Hohlraum durch die Entlüftungsöffnung(en) gedrückt, wobei bevorzugt die Entlüftungsöffnung(en) zumindest teilweise, besonders bevorzugt vollständig, mit dem Füllmaterial gefüllt werden.

Dadurch wird verhindert, dass im fertigen Bauteil eine unerwünschte Öffnung verbleibt.

Bevorzugt ist vorgesehen, dass die zumindest eine Entlüftungsöffnung als Entlüftungsschlitz oder als Entlüftungsloch ausgebildet ist. Dadurch kann auf einfache Art und Weise eine Öffnung im Träger hergestellt werden. Weiters kann durch das Vorsehen eines Schlitzes oder Loches sichergestellt werden, dass die Entlüftungsöffnung relativ eng ist, sodass zwar Luft, aber lediglich wenig Füllmaterial, insbesondere Schaum durchtreten kann. Besonders bevorzugt weist die zumindest eine Entlüftungsöffnung einen Querschnitt auf, der sich vom Hohlraum weg, bevorzugt kontinuierlich, verringert. Dadurch wird die Luftabtransportwirkung der Entlüftungsöffnung(en) weiter verbessert.

Weiters ist bevorzugt vorgesehen, dass zumindest zwei Entlüftungsöffnungen vorgesehen sind, die im Wesentlichen im gleichen Abstand von der Füllöffnung angeordnet sind. Besonders bevorzugt sind zumindest vier Entlüftungsöffnungen vorgesehen, die im Wesentlichen im gleichen Abstand von der Füllöffnung angeordnet sind. Dadurch wird einerseits sichergestellt, dass ausreichend Entlüftungskapazität durch die Entlüftungsöffnungen vorhanden ist und andererseits eine gleichmäßige und vollständige Schaumverteilung im Inneren des Hohlraumes bewirkt.

Hierbei ist besonders bevorzugt vorgesehen, dass die Entlüftungsöffnungen entlang eines um die Füllöffnung verlaufenden Kreises gleichmäßig verteilt angeordnet sind.

Dadurch wird die Gleichmäßigkeit der Schaumverteilung weiter verbessert.

Bei einer bevorzugten Ausführung ist vorgesehen, dass die Dekorschicht vor dem Schließen des Formwerkzeuges durch Vakuum an das Unterwerkzeug angesaugt wird. Dadurch kann die Dekorschicht insbesondere sicher und einfach an dem Unterwerkzeug befestigt werden, ohne die Dekorschicht durch mechanische Haltevorrichtungen zu beschädigen.

Weiters ist bevorzugt vorgesehen, dass vor dem Schließen des Formwerkzeuges die Form der ersten Formhälfte auf die Dekorschicht übertragen wird. Hierbei eignet sich insbesondere eine Verformung mithilfe von Vakuum, da dadurch die Dekorschicht einfach und zuverlässig an die Form des Unterwerkzeuges angelegt werden kann. Die erste Formhälfte wiest hierbei insbesondere eine Vertiefung auf, welche für die nachfolgende Ausbildung des Hohlraums verantwortlich ist.

Bevorzugt ist vorgesehen, dass der Träger durch Vakuum oder mechanische Hilfsmittel, bspw. Spanner oder Greifer, an der zweiten Formhälfte befestigt wird. Dadurch kann ein sicherer Halt des Trägers an der zweiten Formhälfte sichergestellt werden. Dies ist insbesondere dann wichtig, wenn, wie bei einer bevorzugten Ausführung vorgesehen, die zweite Formhälfte als obere Formhälfte von vertikal übereinander angeordneten Formhälften ausgebildet ist.

Weiters ist bevorzugt vorgesehen, dass der Träger vor dem Befestigen an der zweiten Formhälfte mithilfe eines Spritzgussverfahrens hergestellt wird. Der Träger kann auch aus Holzfasern und/oder Naturfasern bestehen bzw. diese umfassen. Insbesondere eignen sich faserverstärkte Kunststoffe mit Polypropylen besonders gut für erfindungsgemäße Träger, vor allem aufgrund der guten Eignung für komplexere Geometrien.

Um eine möglichst geringe Anzahl von Arbeitsschritten vorzusehen, ist bevorzugt vorgesehen, dass der Träger während des Schließens des Formwerkzeuges umgeformt wird, indem der Träger zwischen einer Formfläche der zweiten Formhälfte und einer Gegenformfläche der mit der Dekorschicht versehenen ersten Formhälfte gepresst wird. Dadurch kann einerseits das Formen des Trägers und gleichzeitig das Verbinden mit der Dekorschicht in einem einzigen Schritt durchgeführt werden.

Weiters ist bevorzugt vorgesehen, dass der Träger und die Dekorschicht im Verbindungsbereich direkt miteinander verbunden werden. Der Träger und die Dekorschicht werden besonders bevorzugt miteinander kaschiert, insbesondere durch die Anwendung von Druck und/oder Wärme. Alternativ kann die Verbindung mit Hilfe eines Kaschierklebers realisiert sein.

In einer bevorzugten Ausführung weist der Verbindungsbereich, in welchem der Träger mit der Dekorschicht verbunden ist, an jeder Stelle eine Breite von zumindest 5 cm, insbesondere zumindest 10 cm auf.

Erfindungsgemäß ist weiters ein Träger zur Verwendung in einem erfindungsgemäßen Verfahren vorgesehen, wobei der Träger eine Füllöffnung und zumindest eine Entlüftungsöffnung aufweist.

Bevorzugt ist vorgesehen, dass die zumindest eine Entlüftungsöffnung als Entlüftungsschlitz ausgebildet ist.

Weiters ist bevorzugt vorgesehen, dass zumindest zwei Entlüftungsöffnungen vorgesehen sind, die im Wesentlichen im gleichen Abstand von der Füllöffnung angeordnet sind.

Weiters ist bevorzugt vorgesehen, dass die Entlüftungsöffnungen entlang eines um die Füllöffnung verlaufenden Kreises gleichmäßig verteilt angeordnet sind.

Weiters ist bevorzugt vorgesehen, dass der Träger Holzfasern (HF - Duroplast) oder naturfaserverstärktes Polypropylen aufweist.

Die Erfindung betrifft weiters ein Formwerkzeug zur Durchführung eines erfindungsgemäßen Verfahrens, umfassend eine erste Formhälfte, die zur Aufnahme einer Dekorschicht ausgebildet ist, und eine zweite Formhälfte, die zur Aufnahme eines Trägers ausgebildet ist, wobei das Formwerkzeug durch eine Relativbewegung der ersten und der zweiten Formhälfte zueinander geschlossen werden kann und in der zweiten Formhälfte eine Füllvorrichtung angeordnet ist, um Füllmaterial durch eine, in einem in der zweiten Formhälfte eingelegten Träger angeordnete, Füllöffnung zu füllen, wobei vorgesehen ist, dass die zweite Formhälfte zumindest einen Entlüftungskanal aufweist, der ausgebildet ist, um Luft von dem eingelegten Träger weg zu transportieren. Hierbei wird die Luft also während des Einfüllens des Füllmaterials zuerst vom Hohlraum durch den Träger und anschließend durch die zweite Formhälfte abgeleitet. Der zumindest eine Entlüftungskanal der zweiten Formhälfte weist bevorzugt einen größeren Querschnitt als die Entlüftungsöffnung(en) des Trägers auf, um einen wirkungsvollen Abtransport der Luft aus dem Hohlraum zu gewährleisten.

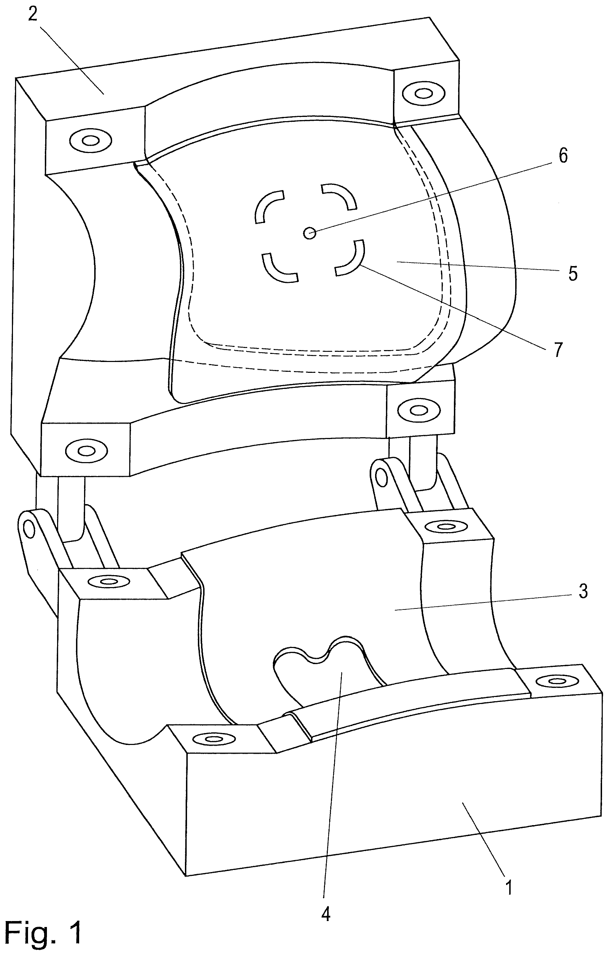

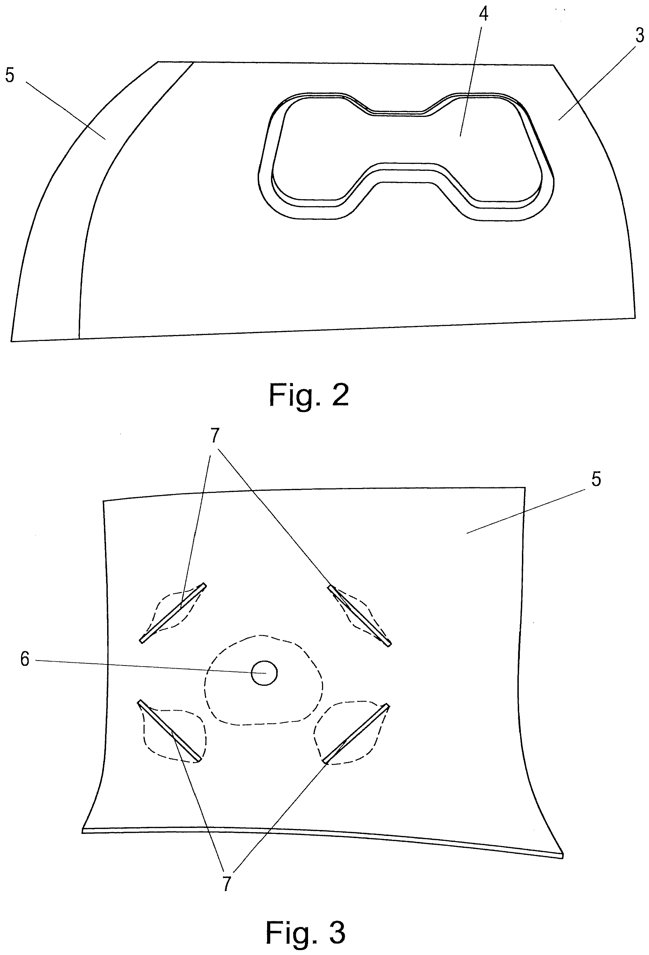

Die Erfindung wird nachfolgend anhand eines in der Zeichnung dargestellten Ausführungsbeispiels näher erläutert. In dieser zeigt Fig. 1 ein erfindungsgemäßes Formwerkzeug in geöffneter Stellung der Formhälften vor Durchführung des erfindungsgemäßen Verfahrens, Fig. 2 eine Vorderansicht eines Bauteils nach der Entnahme aus dem Formwerkzeug nach Durchführung des erfindungsgemäßen Verfahrens und Fig. 3 eine Rückansicht des Bauteils gemäß Fig. 2.

In der Fig. 1 ist ein Formwerkzeug, umfassend eine erste Formhälfte 1 und eine zweite Formhälfte 2, in geöffneter Stellung der Formhälften 1,2 dargestellt. In der unteren, ersten Formhälfte 1 ist eine Dekorschicht 3 eingelegt, die bereits mit Vakuum angesaugt wurde, sodass die Form der ersten Formhälfte 1, insbesondere ein (noch offener) Hohlraum 4 auf die Dekorschicht 3 übertragen ist. An der oberen zweiten Formhälfte 2 ist ein Träger 5 mithilfe von Vakuum befestigt. Der Träger 5 weist einerseits eine Füllöffnung 6 sowie andererseits vier, im gleichen Abstand von der Füllöffnung 6 angeordnete Entlüftungsöffnungen 7 auf. Die Entlüftungsöffnungen 7 sind schlitzförmig ausgebildet und entlang eines um die Füllöffnung 6 verlaufenden Kreises gleichmäßig verteilt angeordnet. Die Füllöffnung 6 sowie die Entlüftungsöffnungen 7 sind derart angeordnet, dass sie sich im verbundenen Zustand im Bereich des Hohlraums 4 befinden, d.h. in den Hohlraum münden.

Im nächsten Schritt wird nunmehr das Formwerkzeug geschlossen, indem die beiden Formhälften 1,2 einander angenähert werden, sodass der Träger 5 und die Dekorschicht 3 aneinandergedrückt werden. Hierdurch wird der Träger 5 mit der Dekorschicht 3 in dem den Hohlraum 4 umgebenden Verbindungsbereich luftdicht verbunden, insbesondere durch Wärme und/oder Druck kaschiert. Dadurch entsteht ein geschlossener Hohlraum 4, der durch den Träger 5 und die Dekorschicht 3 begrenzt wird. Anschließend wird durch die zweite Formhälfte 2 und die Füllöffnung 6 ein Füllmaterial, insbesondere ein aufschäumbares Material, in den Hohlraum 4 eingebracht. Die sich im Hohlraum 4 befindliche Luft kann durch die Lüftungsöffnungen 7 aus dem Hohlraum 4 geführt werden und wird anschließend durch in der zweiten Formhälfte 2 angeordnete Entlüftungskanäle abtransportiert. Nachdem der Hohlraum 4 vollständig gefüllt bzw. das Material vollständig aufgeschäumt ist und der Träger 5 mit der Dekorschicht 3 endfertig verbunden wurde, wird das Formwerkzeug wieder geöffnet, indem die Formhälften 1,2 wieder voneinander entfernt werden. Hierbei wird beispielsweise das den Träger 5 an der zweiten Formhälfte 2 haltende Vakuum gelöst, um ein Trennen der Formhälften 1,2 zu ermöglichen. Anschließend kann das fertige Bauteil aus dem Formwerkzeug entfernt werden.

In Fig. 2 ist das fertige Bauteil, welches bereits aus dem Formwerkzeug entnommen wurde, von der Seite der Dekorschicht 3 dargestellt. Der nunmehr gefüllte Hohlraum 4 weist die Form der Vertiefung der ersten Formhälfte 1 auf und der Träger 5 und die Dekorschicht 3 sind in dem den Hohlraum 4 umgebenden Verbindungsbereich luftdicht miteinander verbunden.

In Fig. 3 ist das fertige Bauteil gemäß Fig. 2 von der Seite des Trägers 5 dargestellt. Hierbei sind insbesondere die Füllöffnung 6 sowie die schlitzförmigen Entlüftungsöffnungen 7 zu erkennen, die jeweils zumindest teilweise mit dem Füllmaterial gefüllt sind.

## Patentansprüche

1. Verfahren zur Herstellung eines Bauteils mithilfe eines Formwerkzeugs, umfassend eine erste (1) und eine zweite (2) Formhälfte, wobei das Formwerkzeug durch eine Relativbewegung der ersten (1) und der zweiten (2) Formhälfte zueinander geschlossen werden kann, wobei eine Dekorschicht (3) in die erste Formhälfte (1) eingelegt wird, ein Träger (5) in die zweite Formhälfte (2) eingelegt wird, der Träger (5) und die Dekorschicht (3) anschließend durch Schließen des Formwerkzeuges unter Ausbildung wenigstens eines Hohlraums (4) in einem den wenigstens einen Hohlraum (4) vollumfänglich umgebenden Verbindungsbereich miteinander verbunden werden und der wenigstens eine Hohlraum (4) durch eine im Träger (5) angeordnete Füllöffnung (6) mit einem Füllmaterial, insbesondere einem aufschäumenden Material gefüllt wird, **dadurch gekennzeichnet, dass** die Verbindung des Trägers (5) mit der Dekorschicht (3) in dem Verbindungsbereich den wenigstens einen Hohlraum (4) öffnungsfrei abschließt und dass während des Füllens mit dem Füllmaterial Luft aus dem wenigstens einen Hohlraum (4) durch zumindest eine im Bereich des wenigstens einen Hohlraumes (4) angeordnete Entlüftungsöffnung (7) im Träger (5) entweicht.

2. Verfahren nach Anspruch 1, **dadurch gekennzeichnet, dass** die zumindest eine Entlüftungsöffnung (7) als Entlüftungsschlitz ausgebildet ist.

3. Verfahren nach Anspruch 1 oder 2, **dadurch gekennzeichnet, dass** zumindest zwei Entlüftungsöffnungen (7) vorgesehen sind, die im Wesentlichen im gleichen Abstand von der Füllöffnung (6) angeordnet sind, wobei die Entlüftungsöffnungen (7) bevorzugt entlang eines um die Füllöffnung (6) verlaufenden Kreises gleichmäßig verteilt angeordnet sind.

4. Verfahren nach einem der Ansprüche 1 bis 3, **dadurch gekennzeichnet, dass** die Dekorschicht (3) vor dem Schließen des Formwerkzeuges durch Vakuum an die erste Formhälfte (1) angesaugt wird.

5. Verfahren nach einem der Ansprüche 1 bis 4, **dadurch gekennzeichnet, dass** vor dem Schließen des Formwerkzeuges die Form der ersten Formhälfte (1) auf die Dekorschicht (3) übertragen wird.

6. Verfahren nach einem der Ansprüche 1 bis 5, **dadurch gekennzeichnet, dass** der Träger (5) durch Vakuum oder mechanische Hilfsmittel, bspw. Spanner oder Greifer, an der zweiten Formhälfte (2) befestigt wird.

7. Verfahren nach einem der Ansprüche 1 bis 6, **dadurch gekennzeichnet, dass** der Träger (5) vor dem Befestigen an der ersten Formhälfte (1) mithilfe eines Spritzgussverfahrens hergestellt wird.

8. Verfahren nach einem der Ansprüche 1 bis 7, **dadurch gekennzeichnet, dass** der Träger (5) während des Schließens des Formwerkzeuges umgeformt wird.

9. Verfahren nach einem der Ansprüche 1 bis 8, **dadurch gekennzeichnet, dass** der Träger (5) und die Dekorschicht (3) im Verbindungsbereich direkt miteinander verbunden werden.

10. Träger zur Verwendung in einem Verfahren nach einem der Ansprüche 1 bis 9, **dadurch gekennzeichnet, dass** der Träger (5) eine Füllöffnung (6) und zumindest eine Entlüftungsöffnung (7) aufweist.

11. Träger nach Anspruch 10, **dadurch gekennzeichnet, dass** die zumindest eine Entlüftungsöffnung (7) als Entlüftungsschlitz ausgebildet ist.

12. Träger nach Anspruch 10 oder 11, **dadurch gekennzeichnet, dass** zumindest zwei Entlüftungsöffnungen (7) vorgesehen sind, die im Wesentlichen im gleichen Abstand von der Füllöffnung (6) angeordnet sind.

13. Träger nach Anspruch 12, **dadurch gekennzeichnet, dass** die Entlüftungsöffnungen (7) entlang eines um die Füllöffnung (6) verlaufenden Kreises gleichmäßig verteilt angeordnet sind.

14. Träger nach einem der Ansprüche 10 bis 13, **dadurch gekennzeichnet, dass** der Träger (5) Holzfasern oder naturfaserverstärktes Polypropylen aufweist.

15. Formwerkzeug zur Durchführung eines Verfahrens gemäß einem der Ansprüche 1 bis 9, umfassend eine erste Formhälfte (1), die zur Aufnahme einer Dekorschicht (3) ausgebildet ist, und eine zweite Formhälfte (2), die zur Aufnahme eines Trägers (5) ausgebildet ist, wobei das Formwerkzeug durch eine Relativbewegung der ersten (1) und der zweiten (2) Formhälfte zueinander geschlossen werden kann und in der zweiten Formhälfte (2) eine Füllvorrichtung angeordnet ist, um Füllmaterial durch eine in einem in der zweiten Formhälfte (2) eingelegten Träger (5) angeordnete Füllöffnung (6) zu füllen, **dadurch gekennzeichnet, dass** die zweite Formhälfte (2) zumindest einen Entlüftungskanal (6) aufweist, der ausgebildet ist, um Luft von dem eingelegten Träger (5) weg zu transportieren.
